# EUROPÄISCHE PATENTANMELDUNG

(11) **EP 1 762 747 A1**
(43) Veröffentlichungstag der Anmeldung: **14.03.2007**
(21) Anmeldenummer: 06015849.0
(22) Anmeldetag: 29.07.2006
(51) Int. Cl.: F16F 1/38

(54) **Buchse**

(30) Priorität: 07.09.2005 DE 102005042612
(71) Anmelder: Carl Freudenberg KG, 69469 Weinheim (DE)
(72) Erfinder: Kaifie, Asem, 22559 Hamburg (DE); Schwarz, Helge, 21376 Garlstorf (DE); Schmidt, André, 21244 Buchholz (DE); Jeglitzka, Maximilian, 70376 Stuttgart (DE)

(57) **Zusammenfassung**

Eine Buchse, umfassend einen Kern (1), mindestens eine diesen umgebende Hülse (2, 10) und mindestens eine elastische Lage (3, 11, 12), welche zwischen der Hülse (2, 10) und dem Kern (1) angeordnet ist, wobei die elastische Lage (3, 11, 12) und die Hülse (2, 10) durch einen Spalt (4) unterbrochen sind und wobei die Spaltweite elastisch veränderbar ist, ist im Hinblick auf die Aufgabe, eine Buchse anzugeben, welche an unterschiedliche Belastungssituationen problemlos anpassbar ist, dadurch gekennzeichnet, dass die spaltseitigen Enden (5, 6) der elastischen Lage (3, 11, 12) mit Ausnehmungen versehen sind.

## Beschreibung

### Technisches Gebiet

Die Erfindung betrifft eine Buchse, umfassend einen Kern, mindestens eine diesen umgebende Hülse und mindestens eine elastische Lage, welche zwischen der Hülse und dem Kern angeordnet ist, wobei die elastische Lage und die Hülse durch einen Spalt unterbrochen sind und wobei die Spaltweite elastisch veränderbar ist.

### Stand der Technik

Derartige Buchsen sind aus dem Stand der Technik bereits bekannt. Diese finden unter anderem in Fahrwerken von Kraftfahrzeugen Verwendung. Auf Grund der elastischen Lagen, welche mit dem Kern bzw. der Hülse verbunden sind, wird einer solchen Buchse eine Radialsteifigkeit und eine Torsionalsteifigkeit verliehen, wenn nämlich die Hülse relativ zum Kern bewegt wird.

Die gattungsbildenden Buchsen weisen einen keilförmigen Spalt auf, der beim Zusammenpressen der Buchse in einer Anordnung verschlossen wird. Schlitzbuchsen dieser Art besitzen jedoch im zusammengepressten Zustand nur eine richtungsunabhängige Radialsteifigkeit. Dies schränkt die Einsatzgebiete der gattungsbildenden Buchsen erheblich ein, da sie Belastungen in unterschiedlichen radialen Raumrichtungen nur unzureichend begegnen können.

### Darstellung der Erfindung

Der Erfindung liegt daher die Aufgabe zugrunde, eine Buchse der eingangs genannten Art derart auszugestalten und weiterzubilden, dass diese an unterschiedliche Belastungssituationen problemlos anpassbar ist.

Die vorliegende Erfindung löst die zuvor genannte Aufgabe durch die Merkmale des Patentanspruchs 1. Danach ist eine Buchse der eingangs genannten Art dadurch gekennzeichnet, dass die spaltseitigen Enden der elastischen Lage mit Ausnehmungen versehen sind.

Erfindungsgemäß ist in einem ersten Schritt erkannt worden, dass die gattungsbildenden Buchsen auf Grund ihrer konstruktiven Ausgestaltung nur eine Radialsteifigkeit aufweisen und insoweit nur beschränkt einsetzbar sind. In einem zweiten Schritt ist sodann erkannt worden, dass die Radialsteifigkeit durch Modifizierung der elastischen Lage erzielt werden kann. Schließlich ist in einem dritten Schritt erkannt worden, dass durch Ausnehmungen an den spaltseitigen Enden der elastischen Lage eine Unsymmetrie der elastischen Lage geschaffen wird, wodurch sich zwei Radialsteifigkeiten in unterschiedlichen Belastungsrichtungen ergeben. Durch die Darstellung zweier Radialsteifigkeiten ist die erfindungsgemäße Schlitzbuchse an unterschiedliche Belastungssituationen anpassbar.

Folglich ist die eingangs genannte Aufgabe gelöst.

In einer konstruktiv besonders günstigen Ausgestaltung könnten die spaltseitigen Enden zumindest einer Hülse aneinander anlegbar sein. Hierdurch ist gewährleistet, dass die Hülse im zusammengepressten Zustand radial wirkende Presskräfte aufnimmt und die elastische Lage unter eine definierte Vorspannung setzt. Dies erlaubt eine definierte Einstellung der Radialsteifigkeiten.

Durch die spaltseitigen Enden der elastischen Lage könnte ein Durchgang definierbar sein. Diese Ausgestaltung ermöglicht die Ausbildung eines Hohlraums in der elastischen Lage, welcher eine Unsymmetrie in deren Aufbau bewirkt. Hierdurch ist nämlich bei einer kreisförmigen Lage ein Bereich geschaffen, welcher als Hohlraum ausgebildet ist. Die Ausbildung dieses Hohlraumes realisiert eine unterschiedliche Radialsteifigkeit in Richtung des Hohlraumes gegenüber der Radialsteifigkeit orthogonal zu dieser Richtung.

Vor diesem Hintergrund könnten die Ausnehmungen der elastischen Lage konkav ausgebildet sein. Dies erlaubt die Schaffung beispielsweise einer nierenförmigen, elliptischen oder sphärischen Hohlraumstruktur. Diese Geometrie bewirkt eine geringere Radialsteifigkeit in Hohlraumrichtung als orthogonal hierzu. Je nach Wahl der Geometrie des Hohlraums kann die Radialsteifigkeit gewählt werden.

Die Ausnehmungen könnten zumindest bereichsweise sphärisch ausgebildet sein. Die sphärische Ausbildung ermöglicht die Schaffung eines symmetrischen Hohlraums, in dem sich nämlich zwei Halbkreise zu einem Vollkreis ergänzen, wenn die Buchse zusammengepresst und die spaltseitigen Enden der elastischen Lage zur Anlage kommen. Diese Geometrie erlaubt eine einfache und problemlose Fertigung der Lage.

Denkbar ist auch, dass der Hohlraum zumindest bereichsweise elliptisch ausgebildet ist. Dies ermöglicht die Abstimmung der Radialsteifigkeit durch geeignete Dimensionierung der Halbachsen der gebildeten Ellipse.

Es könnten mehrere Hohlräume in einer Lage ausgebildet sein, welche voneinander durch Trennwände separiert oder durch Zusammenpressen der Buchse separierbar sind. Diese Hohlräume könnten nebeneinander oder übereinander angeordnet sein. Denkbar ist auch, dass einzelne Hohlräume in Form von Blasen oder Poren in einer Lage eingeschlossen sind. Insbesondere könnten mehrere elastische Lagen konzentrisch zueinander angeordnet sein und übereinander liegende Hohlräume definieren. Durch diese konkreten Ausgestaltungen kann die Radialsteifigkeit durch Wahl der Anzahl und Anordnung der Hohlräume eingestellt werden. Des Weiteren kann quasi eine Reihenschaltung oder Parallelschaltung von Federelementen realisiert werden.

Die Radialsteifigkeit längs der Spaltmittelachse könnte höchstens 8000 N/mm betragen. Dieser Wert hat sich als besonders vorteilhaft erwiesen, wenn die Buchse in Fahrwerken von Kraftfahrzeugen Verwendung findet und eine gute Federungswirkung erzielen soll. Besonders bevorzugt könnte die Radialsteifigkeit längs der Spaltmittelachse zwischen 4000 und 8000 N/mm liegen. Diese Radialsteifigkeit ist dann von Vorteil, wenn zwei elastische Lagen zwischen einer Außenhülse und einer Zwischenhülse bzw. dem Kern angeordnet sind.

Die Radialsteifigkeit orthogonal zur Spaltmittelachse könnte höchstens 12000 N/mm betragen. Diese Radialsteifigkeit hat sich als besonders vorteilhaft erwiesen, wenn die Buchse hohen radialen Belastungen in Kraftfahrzeugen unterworfen wird. Wenn in einer Buchse zwei elastische Lagen verwendet werden, hat sich eine Steifigkeit von 8000 bis 12000 N/mm als vorteilhaft erwiesen.

Die oben genannten Werte einzeln oder in Kombination haben sich als besonders geeignet erwiesen, wenn eine Buchse in einem Drehstablager einer Vorderachse, einem Federaugenlager einer Hinterachse oder einem Querstrebenlager einer Vorderachse Verwendung findet. Denkbar ist jedoch auch, die Buchse an beliebigen anderen funktionalen Positionen von Vorder- und Hinterachsen anzuordnen, soweit dies mit Rücksicht auf die mechanischen Eigenschaften der Buchse sinnvoll ist.

Zwischen dem Kern und der Hülse könnte mindestens eine Zwischenhülse angeordnet sein, wobei zwischen dem Kern und der Zwischenhülse sowie zwischen der Zwischenhülse und der Hülse jeweils mindestens eine elastische Lage angeordnet ist. Diese konkrete Ausgestaltung erlaubt einen besonders stabilen Aufbau der Buchse und die Schaffung mehrerer voneinander getrennter elastischer Bereiche, in denen Hohlräume vorgesehen sind.

Mindestens eine elastische Lage könnte mit den Hülsen und/oder dem Kern durch Vulkanisierung verbunden sein. Vor diesem Hintergrund ist auch denkbar, dass die elastische Lage aus Gummi gefertigt ist. Die Verbindung der elastischen Lage mit den Hülsen und/oder dem Kern durch Vulkanisierung stellt eine dauerhafte und feste Verbindung sowie eine problemlose Kraftübertragung im Fall von Torsionsbewegungen sicher.

Es könnte auch eine elastische Lage aus Gummi verwendet werden, welche nicht durch Vulkanisierung mit den Hülsen und/oder dem Kern verbunden ist. Beispielsweise ist denkbar, dass mindestens eine Lage aus Gummi oder einem anderen geeigneten Material durch eine Presspassung angeordnet ist. Bei dieser Ausgestaltung wird die Lage im Hinblick auf ihre Materialeigenschaften nicht durch einen Vulkanisierungsprozess beeinträchtigt. Vor diesem Hintergrund könnte mindestens eine elastische Lage auch aus Polyurethan gefertigt sein. Polyurethan lässt sich problemlos verarbeiten und auf unterschiedliche Unterlagen aufspritzen, wobei sich das Polyurethan auch an geringfügige Unebenheiten anschmiegt. Hierdurch können Fertigungstoleranzen ausgeglichen werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung zweier bevorzugter Ausführungsbeispiele der erfindungsgemäßen Buchse anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Buchse mit einem Kern und einer Hülse und
- Fig. 2: eine Buchse, bei welcher zwischen Kern und Hülse eine Zwischenhülse angeordnet ist.

### Ausführung der Erfindung

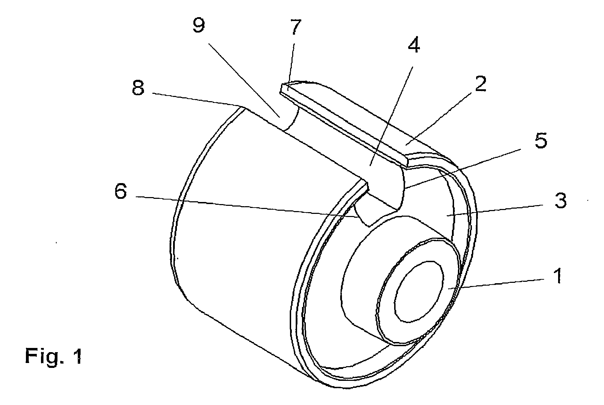

Fig. 1 zeigt eine Buchse mit einem Kern 1, welcher von einer Hülse 2 umgeben ist. Eine elastische Lage 3 ist zwischen der Hülse 2 und dem Kern 1 angeordnet. Die elastische Lage 3 und die Hülse 2 sind durch einen Spalt 4 unterbrochen, wobei die Spaltbreite elastisch veränderbar ist. Die spaltseitigen Enden 5, 6 der elastischen Lage 3 sind mit Ausnehmungen versehen.

Die spaltseitigen Enden 7, 8 der Hülse 2 sind aneinander anlegbar. Durch die spaltseitigen Enden 5, 6 der Lage 3 ist ein Durchgang 9 definierbar.

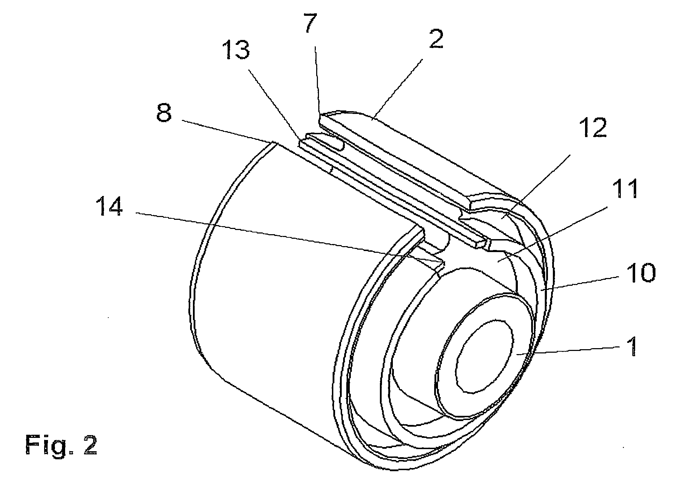

Fig. 2 zeigt eine Buchse mit einem Kern 1, einer Hülse 2 und einer Zwischenhülse 10. Zwischen dem Kern 1 und der Zwischenhülse 10 ist eine elastische Lage 11 angeordnet. Zwischen der Zwischenhülse 10 und der Hülse 2 ist eine elastische Lage 12 angeordnet.

Die Buchsen gemäß Fig. 1 und Fig. 2 sind so komprimierbar, dass die Spaltweite verändert wird. Wenn die spaltseitigen Enden 7, 8 der Hülse 2 bzw. 13, 14 der Zwischenhülse 10 zur Anlage kommen, stehen die elastischen Lagen 3 bzw. 11 und 12 unter einer definierten Vorspannung. Die elastischen Lagen 3, 11, 12 bilden im Bereich des Spaltes Hohlräume, welche bewirken, dass die Radialsteifigkeit in Richtung dieser Hohlräume eine andere ist, als orthogonal zu dieser Richtung.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Buchse, umfassend einen Kern (1), mindestens eine diesen umgebende Hülse (2, 10) und mindestens eine elastische Lage (3, 11, 12), welche zwischen der Hülse (2, 10) und dem Kern (1) angeordnet ist, wobei die elastische Lage (3, 11, 12) und die Hülse (2, 10) durch einen Spalt (4) unterbrochen sind und wobei die Spaltweite elastisch veränderbar ist, **dadurch gekennzeichnet, dass** die spaltseitigen Enden (5, 6) der elastischen Lage (3, 11, 12) mit Ausnehmungen versehen sind.

2. Buchse nach Anspruch 1, **dadurch gekennzeichnet, dass** die spaltseitigen Enden (7, 8, 13, 14) zumindest einer Hülse (2, 10) aneinander anlegbar sind.

3. Buchse nach Anspruch 1 oder 2, **dadurch gekennzeichnet, dass** durch die spaltseitigen Enden (5, 6) zumindest einer Lage (3, 11, 12) ein Durchgang (9) definierbar ist.

4. Buchse nach einem der Ansprüche 1 bis 3, **dadurch gekennzeichnet, dass** die Ausnehmungen zumindest einer Lage (3, 11, 12) konkav ausgebildet sind.

5. Buchse nach einem der Ansprüche 1 bis 4, **dadurch gekennzeichnet, dass** die Ausnehmungen zumindest einer Lage (3, 11, 12) zumindest bereichsweise sphärisch ausgebildet sind.

6. Buchse nach Anspruch 1 bis 5, **dadurch gekennzeichnet, dass** in einer Lage (3, 11, 12) mehrere voneinander separierte Hohlräume ausgebildet sind.

7. Buchse nach einem der Ansprüche 1 bis 6, **dadurch gekennzeichnet, dass** die Radialsteifigkeit längs der Spaltmittelachse höchstens 8000 N/mm beträgt.

8. Buchse nach Anspruch 7, **dadurch gekennzeichnet, dass** die Radialsteifigkeit orthogonal zur Spaltmittelachse höchstens 12000 N/mm beträgt.

9. Buchse nach einem der Ansprüche 1 bis 8, **dadurch gekennzeichnet, dass** zwischen dem Kern (1) und der Hülse (2) mindestens eine Zwischenhülse (10) angeordnet ist, wobei zwischen dem Kern (1) und der Zwischenhülse (10) sowie zwischen der Zwischenhülse (10) und der Hülse (2) jeweils mindestens eine elastische Lage (11, 12) angeordnet ist.

10. Buchse nach einem der Ansprüche 1 bis 9, **dadurch gekennzeichnet, dass** mindestens eine elastische Lage (3, 11, 12) mit den Hülsen (2, 10) und/ oder dem Kern (1) durch Vulkanisierung oder Presspassung verbunden ist.
